(19)

Europäisches Patentamt

European Patent Office

Office européen des brevets

(11) **EP 4 497 931 A1**

(12) **EUROPEAN PATENT APPLICATION**

(43) Date of publication:
   **29.01.2025 Bulletin 2025/05**

(21) Application number: **24190703.9**

(22) Date of filing: **24.07.2024**

(51) International Patent Classification (IPC):
   *F02D 41/00* (2006.01)    *F02D 41/14* (2006.01)
   *F02D 19/06* (2006.01)    *F02D 19/08* (2006.01)
   *F02D 19/10* (2006.01)    *F02D 35/02* (2006.01)

(52) Cooperative Patent Classification (CPC):
   **F02D 41/0027; F02D 19/0613; F02D 19/0623;
   F02D 19/0642; F02D 19/0644; F02D 19/081;
   F02D 19/085; F02D 19/10; F02D 35/023;
   F02D 35/027; F02D 41/0025; F02D 41/1498;**
   F02D 19/0647; F02D 2200/1015

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH MA MD TN**

(30) Priority: **27.07.2023 JP 2023122534**

(71) Applicant: **Yanmar Holdings Co., Ltd.
   Osaka-shi, Osaka (JP)**

(72) Inventors:
   • **MATSUNAGA, Daichi
   Osaka (JP)**

   • **MORITA, Gin
   Osaka (JP)**
   • **TENTORA, Takafumi
   Osaka (JP)**
   • **TAKEMOTO, Toru
   Osaka (JP)**
   • **KAMINO, Takafumi
   Osaka (JP)**
   • **VICHI, Giovanni
   Firenze (IT)**

(74) Representative: **Dennemeyer & Associates S.A.
   Postfach 70 04 25
   81304 München (DE)**

(54) **ENGINE DEVICE AND METHOD OF CONTROLLING ENGINE DEVICE**

(57) [Problem] Provided are an engine device in which an abnormal combustion suppression method is appropriately determined and which can be driven while suppressing abnormal combustion; and a method of controlling the engine device.

[Solution] In an engine device 1 driven by gaseous fuel, abnormal combustion occurring in a combustion chamber 12a of an engine 2 is detected, an occurrence frequency and an occurrence intensity of the abnormal combustion are monitored, and a suppression method for suppressing the abnormal combustion is determined according to the occurrence frequency and the occurrence intensity. At least one of ignition timing of the gaseous fuel, an air excess ratio of intake air in a mixture gas composed of the gaseous fuel and the intake air, and shut-off of the gaseous fuel is controlled as the suppression method in the engine device 1

FIG. 1

EP 4 497 931 A1

## Description

TECHNICAL FIELD

The present invention relates to an engine device driven by inputting gaseous fuel into a combustion chamber and to a method of controlling the engine device.

BACKGROUND ART

Heretofore used engine devices include a gas engine driven by inputting gaseous fuel such as hydrogen into a combustion chamber inside a cylinder, and a dual fuel engine driven by inputting at least one of gaseous fuel such as hydrogen and liquid fuel such as light oil or heavy oil into a combustion chamber inside a cylinder. For example, a dual fuel engine operates in either a gas operation mode in which gaseous fuel is input into a combustion chamber to drive the engine or a diesel operation mode in which liquid fuel is input into a combustion chamber to driven the engine. As another operation mode, a dual fuel engine operates in a multi-fuel mode in which both gaseous fuel and liquid fuel are input into a combustion chamber to drive the engine. In such an engine device, since abnormal combustion such as preignition in which the gaseous fuel self-ignites in the combustion chamber may occur before ignition in a micro-pilot method for injecting a small amount of the liquid fuel or before ignition by a spark ignition-type ignition device using an ignition plug, it is required to suppress such abnormal combustion.

For example, an internal-combustion engine controlling device according to Patent Document 1 includes: an occurrence frequency detection means that detects an occurrence frequency of preignition per unit time; and a temperature region changeable means that changes a range of a preignition suppression temperature region so that when the occurrence frequency of preignition exceeds an allowable limit in at least a partial region of a preignition suppression temperature region, the occurrence frequency of preignition becomes equal to or less than the allowable limit also in the partial region. Then, a cylinder wall temperature controlling means of this controlling device controls the preignition suppression temperature region changed by the temperature region changeable means so that a wall temperature parameter falls within the preignition suppression temperature region.

According to Patent Document 2, a method of controlling combustion of a turbocharged internal combustion engine in which ignition is controlled includes: (a) a step of selecting, as a function of a rotation angle of a crankshaft, a physical model representing progression of pressure inside a cylinder within one combustion range with no preignition phenomenon; (b) a step of predicting cylinder pressure from a physical model and a measured value of intake manifold pressure; (c) a step of comparing at least one first value of a variable calculated using the measured value of the cylinder pressure and at least one second value of a variable calculated using a predicted value of the cylinder pressure to detect the onset of abnormal combustion; a step of characterizing the magnitude of preignition by repeating steps (b) and (c) at several determined crankshaft angles; and a step of controlling the progression of abnormal combustion detected inside a combustion chamber according to the magnitude of the preignition phenomenon.

An internal combustion engine combustion device according to Patent Document 3 includes a fuel injection valve for injecting and supplying gaseous fuel to a combustion chamber, and an ignition plug for igniting the gaseous fuel injected and supplied by the fuel injection valve, wherein the fuel injection valve is provided at a position where the injected and supplied gaseous fuel gathers around the ignition plug, the internal combustion engine is driven by liquid fuel in addition to the gaseous fuel, and a fuel switching means that switches the fuel for the internal combustion engine in response to an engine operation state is further provided, and the fuel switching means switches the fuel so that the internal combustion engine is driven only by the liquid fuel when preignition occurs in the internal combustion engine.

PRIOR ART DOCUMENT

PATENT DOCUMENT

    Patent Document 1: Japanese Patent No. 5939263
    Patent Document 2: Japanese Patent No. 5405950
    Patent Document 3: Japanese Patent No. 4075165

SUMMARY OF INVENTION

TECHNICAL PROBLEM

In the related art described in Patent Document 1, since the preignition suppression control is determined by evaluating only the occurrence frequency of preignition, in a case where the occurrence frequency is low, the abnormal combustion suppression control cannot be executed even when abnormal combustion with a large increase range of the internal pressure (cylinder pressure) of the combustion chamber occurs, and the engine (internal combustion engine) may be damaged due to cylinder pressure exceeding an allowable range.

On the other hand, in the related art described in Patent Document 2, since the abnormal combustion suppression control is determined by evaluating only the increase range of the internal pressure (cylinder pressure) of the combustion chamber, when the increase range of the cylinder pressure is small, the abnormal combustion suppression control cannot be executed even when abnormal combustion in which the occurrence frequency of preignition is high occurs.

As described above, in the related art, since only limited suppression methods are provided for abnormal combustion such as preignition occurring from various causes, when the combination of the cause of occurrence of abnormal combustion and the suppression method is not appropriate, abnormal combustion cannot be suppressed.

In addition, in the related art described in Patent Document 3, since the operation time of the gaseous fuel (hydrogen, ammonia, and the like) with which the effect of reducing $CO_2$ (carbon dioxide) is expected is limited, the effect of reducing greenhouse effect gas is limited, and the product strength of the engine device is lowered.

An object of the present invention is to provide: an engine device in which an abnormal combustion suppression method is more appropriately determined and which can be driven while suppressing abnormal combustion; and a method of controlling the engine device.

SOLUTION TO PROBLEM

In order to solve the above problem, an engine device of the present invention is driven by gaseous fuel and is characterized in that abnormal combustion occurring inside a combustion chamber is detected, an occurrence frequency and an occurrence intensity of the abnormal combustion are monitored, and a suppression method for suppressing the abnormal combustion is determined according to the occurrence frequency and the occurrence intensity.

Alternatively, an engine device of the present invention is driven by at least one of gaseous fuel and liquid fuel and is characterized in that when the engine device is driven by the gaseous fuel, abnormal combustion occurring in a combustion chamber is detected, an occurrence frequency and an occurrence intensity of the abnormal combustion are monitored, a suppression method for suppressing the abnormal combustion is determined according to the occurrence frequency and the occurrence intensity, and at least one of ignition timing of the gaseous fuel, an air excess ratio of intake air in a mixture gas composed of the gaseous fuel and the intake air, shut-off of the gaseous fuel, and switching to driving by both the gaseous fuel and the liquid fuel or to driving only by the liquid fuel is controlled as the suppression method.

Furthermore, in order to solve the above problem, a method of controlling an engine device of the present invention is a method of controlling an engine device driven by gaseous fuel, the method characterized in that abnormal combustion occurring in a combustion chamber is detected, an occurrence frequency and an occurrence intensity of the abnormal combustion are monitored, and a suppression method for suppressing the abnormal combustion is determined according to the occurrence frequency and the occurrence intensity.

ADVANTAGEOUS EFFECTS OF INVENTION

According to the present invention, an engine device in which an abnormal combustion suppression method is more appropriately determined and which can be driven while suppressing abnormal combustion, and a method of controlling the engine device are provided.

BRIEF DESCRIPTION OF DRAWINGS

FIG. 1 is a left side view illustrating an engine device according to an embodiment of the present invention.
FIG. 2 is a graph showing an example of an operable region in relation to ignition timing and air excess ratio in an engine device.
FIG. 3 is a graph showing an example of distribution of abnormal combustion occurrence frequencies in the operable region in relation to ignition timing and air excess ratio in the engine device according to the embodiment of the present invention.
FIG. 4 is a graph showing an example of distribution of abnormal combustion occurrence intensities in the operable region in relation to ignition timing and air excess ratio in the engine device according to the embodiment of the present invention.
FIG. 5 is a matrix chart showing an example of an abnormal combustion suppression method according to an abnormal combustion occurrence frequency and an abnormal combustion occurrence intensity in the engine device according to the embodiment of the present invention.

DESCRIPTION OF EMBODIMENTS

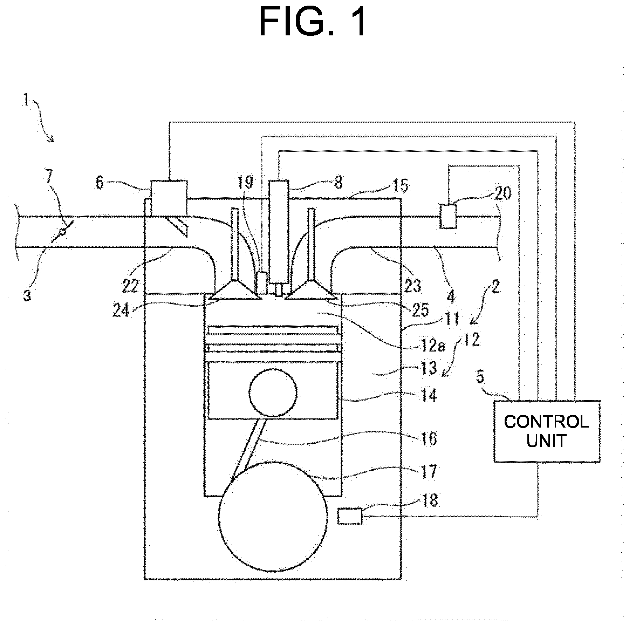

An engine device 1, which is an embodiment of the present invention, is described with reference to drawings. As illustrated in FIG. 1, the engine device 1 includes an engine 2, an intake passage 3, an exhaust passage 4, and a control unit 5.

In particular, in the present embodiment, the engine device 1 is a gas engine configured such that the engine can be driven by inputting gaseous fuel such as hydrogen into a combustion chamber 12a of the engine 2, and the engine device 1 includes a gaseous fuel injection unit 6 for inputting the gaseous fuel, a throttle valve 7 for adjusting an intake air amount, and an ignition device 8 igniting the gaseous fuel inside the combustion chamber 12a.

The engine 2 is configured such that a cylinder block 11 includes a plurality of cylinder engines 12. However, only one cylinder engine 12 is illustrated in FIG. 1. As illustrated in FIG. 1, each cylinder engine 12 is composed of a cylinder 13, a piston 14, and a cylinder head 15. The gaseous fuel injection unit 6 and the ignition device 8 are provided for each of the cylinder engines 12.

The cylinder 13 is formed to have a cylindrical shape in the cylinder block 11, and the piston 14 is slidably housed in the cylinder 13, for example. The cylinder head 15 is attached to the upper side of the cylinder 13, and the cylinder 13 and the cylinder head 15 form the combustion chamber 12a inside thereof.

A crankshaft 17 is coupled to the piston 14 via a connecting rod 16 below the cylinder 13, and reciprocating motion of the piston 14 is converted into rotary motion of the crankshaft 17 via the connecting rod 16.

The cylinder 13 is provided with an angle sensor 18 that detects the rotation angle of the crankshaft 17, that is, the rotation number of the engine 2, and the angle sensor 18 sends a detection result to the control unit 5. The cylinder 13 is provided with a pressure sensor 19 that detects the internal pressure of the combustion chamber 12a, that is, the cylinder pressure of the cylinder 13, and the pressure sensor 19 sends a detection result to the control unit 5.

The cylinder head 15 also has an intake port 22 and an exhaust port 23 communicating to the combustion chamber 12a of the cylinder 13, and an intake valve 24 and an exhaust valve 25 opening and closing the intake port 22 and the exhaust port 23 with respect to the combustion chamber 12a, respectively, are provided.

The intake port 22 is connected to the intake passage 3 and introduces air supplied from the intake passage 3 to the combustion chamber 12a. The exhaust port 23 is connected to the exhaust passage 4 and discharges exhaust gas generated in the combustion chamber 12a to the exhaust passage 4. Mixture gas of fuel gas and air can be taken into the combustion chamber 12a via the intake port 22 by opening the intake valve 24. Meanwhile, exhaust gas generated in the combustion chamber 12a can be discharged via the exhaust port 23 by opening the exhaust valve 25.

Although an example in which the intake passage 3 and the intake port 22 are directly connected is illustrated in FIG. 1, an intake manifold having a branched passage branched from the intake passage 3 to the plurality of cylinder engines 12 may be provided between the intake passage 3 and the engine 2 in order to connect the intake passage 3 to each of the intake ports 22 of the plurality of cylinder engines 12. In addition, although an example in which the exhaust passage 4 and the exhaust port 23 are directly connected is illustrated in FIG. 1, an exhaust manifold having a branched passage branched from the exhaust passage 4 to the plurality of cylinder engines 12 may be provided between the exhaust passage 4 and the engine 2 when the exhaust passage 4 is connected to each of the exhaust ports 23 of the plurality of cylinder engines 12.

In each of the cylinder engines 12, the gaseous fuel injection unit 6 is provided to the intake port 22, is controlled by the control unit 5, and injects gaseous fuel supplied from a gaseous fuel tank (not shown) to the intake port 22. Mixture gas of air supplied from the intake passage 3 and the gaseous fuel supplied from the gaseous fuel tank (not shown) is supplied to the combustion chamber 12a from the intake port 22. The gaseous fuel injection unit 6 is composed of a gas admission valve, a gas injector, or the like, for example. The pressure for injecting the gaseous fuel, the timing of injecting the gaseous fuel, and the like of the gaseous fuel injection unit 6 are controlled by the control unit 5.

The ignition device 8 is provided to the cylinder head 15 in each of the cylinder engines 12. The ignition device 8 employs, for example, a micro-pilot method for injecting a small amount of liquid fuel and is composed of an injector injecting liquid fuel supplied from a liquid fuel tank (not shown) to the combustion chamber 12a below the cylinder head 15, for example. The pressure for injecting the liquid fuel, the timing of injecting the liquid fuel, and the like of the ignition device 8 are controlled by the control unit 5. Alternatively, the ignition device 8 may be composed of a spark ignition-type device using an ignition plug.

The intake passage 3 is connected to the intake port 22 of the cylinder engine 12 of the engine 2 and supplies compressed and cooled air to each of the cylinder engines 12 via the intake port 22. Incidentally, a turbocharger (not shown) that compresses air flowing through the intake passage 3 and sends same to the downstream side in the intake direction or an intercooler (not shown) that cools air flowing through the intake passage 3 may be provided to the intake passage 3. In addition, an air filter (not shown) that purifies fresh air and introduces same may be provided to the upstream end in the intake direction of the intake passage 3.

The throttle valve 7 for adjusting the intake air amount sent to the intake port 22 is provided to the intake passage 3. The opening degree of the throttle valve 7 is adjusted through control by the control unit 5, and the throttle valve 7 adjusts the intake air amount sent to the intake port 22 according to the opening degree of the throttle valve 7 and thus can adjust the air excess ratio (ratio of intake air in the mixture gas) of the mixture gas of air and the gaseous fuel input into the combustion chamber 12a from the intake port 22. That is, the flow rate of air supplied to the intake port 22 from the intake passage 3 can be adjusted by adjusting the opening degree of the throttle valve 7.

The exhaust passage 4 is connected to the exhaust port 23 of each of the cylinder engines 12 of the engine 2 and discharges exhaust gas generated in each of the cylinder engines 12 via the exhaust port 23. An air-fuel ratio sensor 20 that detects the air-fuel ratio of the exhaust gas is provided to the exhaust passage 4, and the air-fuel ratio sensor 20 sends a detection result to the control unit 5.

The control unit 5 is a computer such as an engine control unit (ECU) that controls operation of the engine 2, is provided with a CPU, a ROM, a RAM, and the like, and is configured to control each unit of the engine 2. The control unit 5 may store various programs for controlling the engine 2 and control the engine 2 by reading out a program and executing same.

In the engine device 1, the ignition device 8 is usually actuated at an ignition timing by the control unit 5, and gaseous fuel inside the combustion chamber 12a is ignited by injecting liquid fuel into the combustion chamber 12a at a predetermined liquid fuel injection timing (injection timing) to start combustion, for example. However, when an abnormal condition such as an excessively high temperature or an excessively high pressure occurs inside the combustion chamber 12a, gaseous fuel inside the combustion chamber 12a may self-ignite before the ignition timing (liquid fuel injection timing), and abnormal combustion such as preignition may occur.

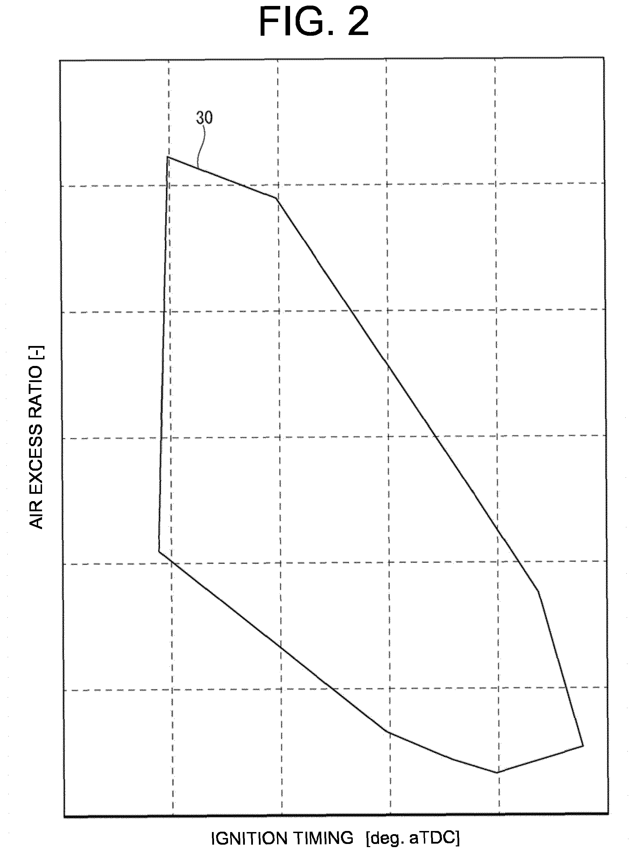

In addition, when the engine device 1 is operated, as shown in FIG. 2, in relation to the ignition timing (liquid fuel injection timing) of the combustion chamber 12a and the air excess ratio (ratio of intake air to fuel in the mixture gas) of the mixture gas input into the combustion chamber 12a, the engine device 1 can be operated within the range of the operable region 30, but outside the range of the operable region 30, dangerous combustion is highly likely to occur in the combustion chamber 12a, and the engine device 1 cannot be operated.

In addition, abnormal combustion such as preignition is highly likely to occur in the engine 2 in the vicinity of a boundary portion of the operable region 30 even within the range of the operable region 30. For example, preignition and backfiring (backfire) as abnormal combustion are highly likely to occur in the vicinity of a first boundary portion 31 on the side on which the air excess ratio is relatively high in the operable region 30, and preignition and knocking as abnormal combustion are highly likely to occur in the vicinity of a second boundary portion 32 on the side on which the air excess ratio is relatively low.

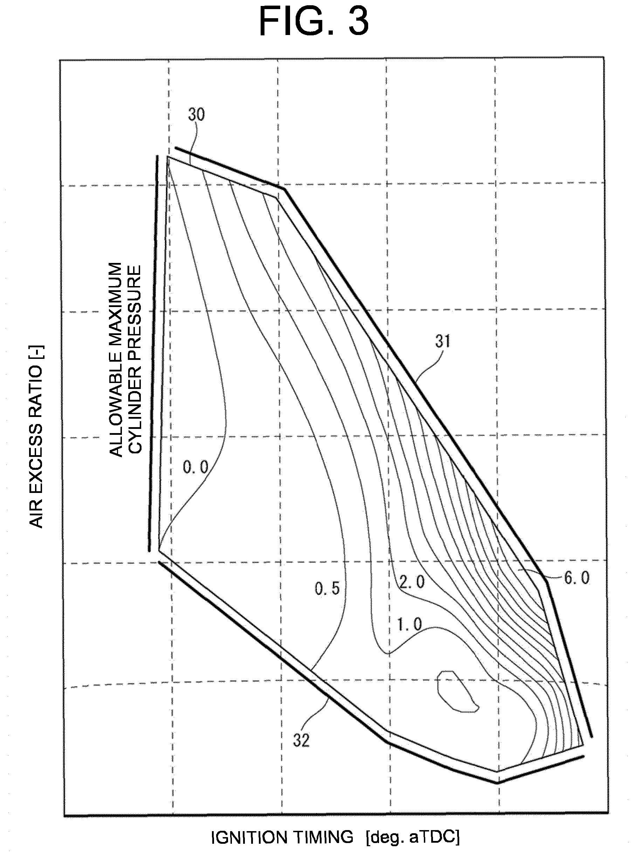

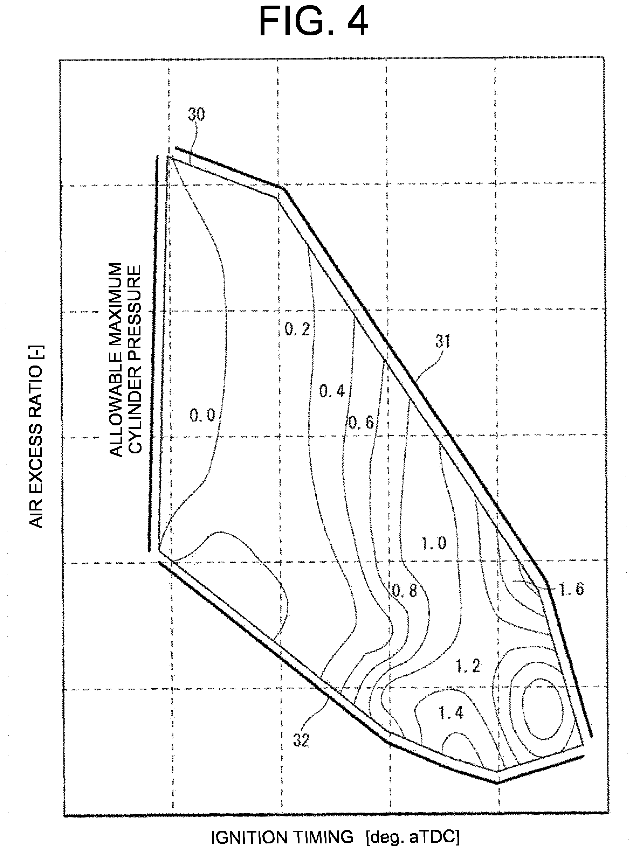

In addition, FIG. 3 shows a result obtained by monitoring occurrence frequencies of abnormal combustion occurring during operating the engine device 1 within the range of the operable region 30, and the occurrence frequencies of abnormal combustion increase in the vicinity of the first boundary portion 31 and the second boundary portion 32 of the operable region 30. FIG. 4 shows a result obtained by monitoring occurrence intensities of abnormal combustion occurring during operating the engine device 1 within the range of the operable region 30, and the occurrence intensities of abnormal combustion increase in the vicinity of the first boundary portion 31 and the second boundary portion 32 of the operable region 30.

However, in the operable region 30, the distribution of the occurrence frequencies of abnormal combustion and the distribution of the occurrence intensities of abnormal combustion are different from each other. Therefore, when abnormal combustion in the engine 2 is detected, it is difficult to determine which type of abnormal combustion is occurring even by referring to the air excess ratio and the ignition timing, and it is difficult to appropriately determine a suppression method for suppressing the abnormal combustion. In addition, it is difficult to determine which type of abnormal combustion is occurring by referring only to the occurrence frequency of the abnormal combustion or to the occurrence intensity of the abnormal combustion, and it is difficult to appropriately determine a suppression method for suppressing the abnormal combustion.

Therefore, in the present invention, the control unit 5 detects abnormal combustion occurring in the combustion chamber 12a, monitors the occurrence frequency and the occurrence intensity of the abnormal combustion, and determines a suppression method for suppressing the abnormal combustion according to the occurrence frequency and the occurrence intensity.

Specifically, the control unit 5 firstly detects abnormal combustion occurring in the engine 2 after the engine device 1 starts operation. For example, the control unit 5 detects the cylinder pressure of the cylinder 13 by the pressure sensor 19, monitors the ignition timing (liquid fuel injection timing) of the ignition device 8, and determines that preignition has occurred when the cylinder pressure exceeds a predetermined cylinder pressure threshold before the ignition timing.

Further, the control unit 5 detects the rotation angle of the crankshaft 17 by the angle sensor 18 and calculates the rotation number of the engine 2 based on the rotation angle. The control unit 5 calculates the occurrence frequency of abnormal combustion as a ratio of cycles determined to be preignition among multiple cycles from the rotation number of the engine 2 in a predetermined period and the number of times of abnormal combustion occurring in the predetermined period.

Further, the control unit 5 detects, as the occurrence intensity (preignition intensity) of abnormal combustion, the increase range of the internal pressure of the combustion chamber 12a, that is, the increase range of the cylinder pressure of the cylinder 13, due to preignition. For example, the control unit 5 detects the maximum cylinder pressure of the cylinder 13 by the pressure sensor 19 during normal operation of the engine 2, and acquires the mode value of the maximum cylinder pressure during normal combustion based on the detection result. Further, the control unit 5 detects the maximum cylinder pressure of the cylinder 13 by the pressure sensor 19 at the time of occurrence of preignition in the engine 2, and acquires the maximum cylinder pressure at the time of preignition. Then, the control unit 5 calculates the occurrence intensity Int of abnormal combustion from the differential average of the maximum cylinder pressure Pmax1 at the time of preignition and the mode value Pmax2 of the maximum cylinder pressure during normal combustion, as shown in Mathematical Expression (1) below. In Mathematical Expression (1), n represents the number of preignition cycles, and Pmaxl(k) represents the maximum cylinder pressure at the time of preignition in the k-th cycle.

[Expression 1]

$$Int = \frac{\sum_{k=1}^{n}(Pmax1(k)-Pmax2)}{n} \quad \cdots (1)$$

The control unit 5 conducts conditional judgment such as a matrix and a flowchart according to the occurrence frequency and the occurrence intensity of the abnormal combustion detected as described above, and determines a suppression method for suppressing the abnormal combustion. The control unit 5 may store a program for conducting conditional judgment on the occurrence frequency and the occurrence intensity of abnormal combustion, and determine the suppression method by reading out and executing the program.

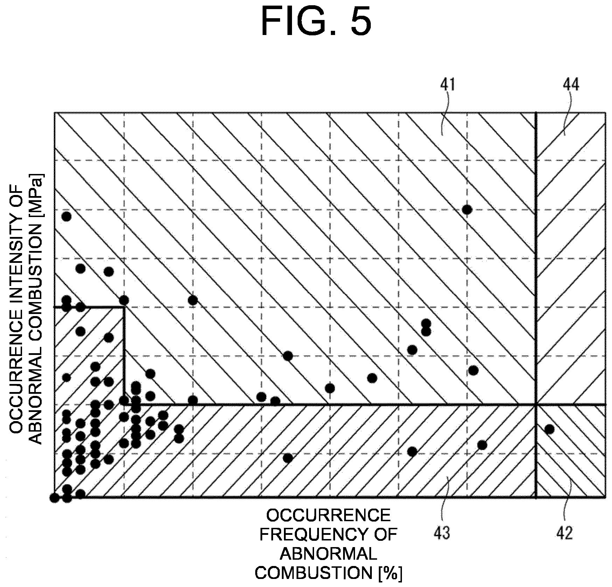

FIG. 5 shows a suppression method selection matrix in relation to the occurrence frequency and the occurrence intensity of abnormal combustion. According to the conditional judgment like this selection matrix, the control unit 5 performs control to make the gaseous fuel rich and advance the ignition timing (liquid fuel injection timing) in a first region 41 where the occurrence frequency of abnormal combustion is high and the occurrence intensity of abnormal combustion is high. At this time, the control unit 5 may determine whether the occurrence frequency of abnormal combustion is high or low by comparing the occurrence frequency of abnormal combustion with a predetermined frequency threshold value, and determine whether the occurrence intensity of abnormal combustion is high or low by comparing the occurrence intensity of abnormal combustion with a predetermined intensity threshold value. Incidentally, the frequency threshold and the intensity threshold may be provided according to the model and environment of the engine device 1. The control unit 5 may control at least one of the ignition timing of gaseous fuel and the air excess ratio of intake air in the mixture gas composed of gaseous fuel and the intake air. For example, the control unit 5 controls the ignition device 8 to advance the ignition timing, and controls the gaseous fuel injection unit 6 and the throttle valve 7 to reduce the air excess ratio, making the gaseous fuel rich.

In addition, the control unit 5 performs control to make the gaseous fuel lean in a second region 42 where the occurrence frequency of abnormal combustion is low and the occurrence intensity of abnormal combustion is high. At this time, the control unit 5 may control at least one of shut-off of the gaseous fuel and the air excess ratio of intake air in the mixture gas composed of gaseous fuel and the intake air. For example, the control unit 5 controls the gaseous fuel injection unit 6 and the throttle valve 7 to reduce the air excess ratio, making the gaseous fuel lean.

Incidentally, the control unit 5 determines that suppression of abnormal combustion is unnecessary in a third region 43 where the occurrence frequency of abnormal combustion is low and the occurrence intensity of abnormal combustion is low, because the operation of the engine 2 is in a safe state. In addition, the control unit 5 may not suppress abnormal combustion and, for example, stop the driving of the engine 2 in a fourth region 44 where the occurrence frequency of abnormal combustion is high and the occurrence intensity of abnormal combustion is high beyond the first region 41 and the second region 42, because the operation of the engine 2 is in an inoperable state beyond the operable region 30.

As described above, according to the present embodiment, the engine device 1 which is driven by inputting gaseous fuel into the combustion chamber 12a of the engine 2 detects abnormal combustion occurring in the combustion chamber 12a, monitors the occurrence frequency and the occurrence intensity of the abnormal combustion, and determines and executes a suppression method for suppressing the abnormal combustion according to the occurrence frequency and the occurrence intensity.

In other words, the method of controlling the engine device 1 which is driven by inputting gaseous fuel into the combustion chamber 12a of the engine 2 detects abnormal combustion occurring in the combustion chamber 12a, monitors the occurrence frequency and the occurrence intensity of the abnormal combustion, and determines and executes a suppression method for suppressing the abnormal combustion according to the occurrence frequency and the occurrence intensity. The control method may be executed by the control unit 5, and may be configured by a program, for example.

In the engine device 1, in a case where abnormal combustion is determined based only on the occurrence frequency, abnormal combustion with a low occurrence frequency is overlooked even when the occurrence intensity thereof is extremely high. In addition, in the engine device 1, in a case where abnormal combustion is determined based only on the occurrence intensity, abnormal combustion with a low occurrence intensity is overlooked even when the occurrence frequency thereof is extremely high. In any case, there is a risk of causing extremely serious damage to the engine 2 due to overlooked abnormal combustion. In addition, there are various combinations of the magnitude of the abnormal combustion occurrence frequency and the magnitude of the abnormal combustion occurrence intensity, and the optimal method for suppressing abnormal combustion differs depending on the combination of the occurrence frequency and the occurrence intensity.

On the other hand, the engine device 1 of the present embodiment can more appropriately determine the abnormal combustion suppression method by simultaneously referring to both the abnormal combustion occurrence frequency and the abnormal combustion occurrence intensity, can more appropriately suppress abnormal combustion by the suppression method, and can operate the engine 2 more safely.

Further, according to the present embodiment, the engine device 1 controls at least one of ignition timing of gaseous fuel, an air excess ratio of intake air in a mixture gas composed of the gaseous fuel and the intake air, and shut-off of the gaseous fuel as the suppression method.

Consequently, the engine device 1 can specifically determine the abnormal combustion suppression method according to the abnormal combustion occurrence frequency and the abnormal combustion occurrence intensity, and can optimally select single use or combination use of the abnormal combustion suppression method.

Further, according to the present embodiment, the engine device 1 determines the suppression method based on the conditional judgment such as a matrix and a flowchart indicating the relationship between the abnormal combustion suppression method and the occurrence frequency and the occurrence intensity of abnormal combustion.

Consequently, the engine device 1 can easily determine and control the method for suppressing the abnormal combustion in an easy-to-understand manner by using the conditional judgment such as a matrix and a flowchart. Further, control data input to the control unit 5 can be simplified and easily handled.

In addition, according to the present embodiment, the engine device 1 determines the abnormal combustion suppression method based on the comparison determination between the abnormal combustion occurrence frequency and the predetermined frequency threshold and on the comparison determination between the abnormal combustion occurrence intensity and the predetermined intensity threshold.

Consequently, the engine device 1 can clearly identify and determine the statuses of the abnormal combustion occurrence frequency and the abnormal combustion occurrence intensity, and can select an abnormal combustion suppression method more suitable for the statuses of the abnormal combustion occurrence frequency and the abnormal combustion occurrence intensity.

In the example described in the embodiment described above, the control unit 5 determines whether the abnormal combustion occurrence frequency and the abnormal combustion occurrence intensity are low or high in the engine device 1 in conditional judgment on the abnormal combustion occurrence frequency and the abnormal combustion occurrence intensity. However, the present invention is not limited to such an example.

In another example, the control unit 5 may individually determine the abnormal combustion occurrence frequency and the abnormal combustion occurrence intensity on a three-level or higher scale, and determine the abnormal combustion suppression method according to the determination result. When the ignition timing of the gaseous fuel and the air excess ratio of the intake air are controlled as the abnormal combustion suppression method, the control unit 5 may determine the control amount of the ignition timing and the air excess ratio according to the levels of the abnormal combustion occurrence frequency and the abnormal combustion occurrence intensity. Alternatively, in another example, the control unit 5 may use a mathematical expression for calculating the control amount of the ignition timing or the air excess ratio based on th abnormal combustion occurrence frequency and the abnormal combustion occurrence intensity.

In the example described in the embodiment described above, the engine device 1 is a gas engine configured such that the gas engine can be driven by inputting gaseous fuel such as hydrogen into the combustion chamber 12a of the engine 2. However, the present invention is not limited to such an example. In another example, the engine device 1 may be configured as a dual fuel engine that is driven by inputting at least one of gaseous fuel such as hydrogen and liquid fuel such as light oil or heavy oil into the combustion chamber 12a of the engine 2. In this case, gaseous fuel is input by the gaseous fuel injection unit 6, and liquid fuel is input by a liquid fuel injection unit such as the ignition device 8 employing a micro-pilot method in the engine device 1.

The engine device 1 of the dual fuel engine operates in either one operation mode of a gas mode in which gaseous fuel is input into the combustion chamber 12a to drive the engine device 1 or a diesel mode in which liquid fuel is input into the combustion chamber 12a to drive the engine device 1. As another operation mode, the engine device 1 operates in a multi-fuel mode in which both gaseous fuel and liquid fuel are input into the combustion chamber 12a to drive the engine device 1.

In the dual fuel engine as the engine device 1, the control unit 5 controls at least one of ignition timing of the gaseous fuel, the air excess ratio of mixture gas, shut-off of the gaseous fuel, and switching to driving using both gaseous fuel and liquid fuel (multi-fuel mode) or driving using only liquid fuel (diesel mode) as the abnormal combustion suppression method determined according to the abnormal combustion occurrence frequency and the abnormal combustion occurrence intensity.

Incidentally, the present invention can be appropriately modified within a range not departing from the spirit or idea of the present invention which can be read from the claims and the entire specification, and an engine device and a method of controlling the engine device accompanying such modifications are also included in the technical idea of the present invention.

Supplementary notes to invention

Hereinafter, the summary of the invention extracted from the above-described embodiments will be additionally described. Note that the respective configurations and the respective processing functions described in the following supplementary notes can be selectively and arbitrarily combined.

Supplementary Note 1

An engine device driven by gaseous fuel, in which

abnormal combustion occurring in a combustion chamber is detected,
an occurrence frequency and an occurrence intensity of the abnormal combustion are monitored, and
a suppression method for suppressing the abnormal combustion is determined according to the occurrence frequency and the occurrence intensity.

Supplementary Note 2

The engine device according to Supplementary Note 1, in which at least one of ignition timing of the gaseous fuel, an air excess ratio of intake air in a mixture gas composed of the gaseous fuel and the intake air, or shut-off of the gaseous fuel is controlled as the suppression method.

Supplementary Note 3

The engine device according to Supplementary Note 1 or 2, in which the suppression method is determined based on conditional judgment indicating a relationship between the suppression method and the occurrence frequency and the occurrence intensity.

Supplementary Note 4

The engine device according to any of Supplementary Notes 1 to 3, in which the suppression method is determined based on a frequency threshold of the occurrence frequency and an intensity threshold of the occurrence intensity.

Supplementary Note 5

An engine device driven by at least one of gaseous fuel or liquid fuel, in which

when the engine device is driven by the gaseous fuel, abnormal combustion occurring in a combustion chamber is detected,
an occurrence frequency and an occurrence intensity of the abnormal combustion are monitored,
a suppression method for suppressing the abnormal combustion is determined according to the occurrence frequency and the occurrence intensity, and
at least one of ignition timing of the gaseous fuel, an air excess ratio of intake air in a mixture gas composed of the gaseous fuel and the intake air, shut-off of the gaseous fuel, or switching to driving by both the gaseous fuel and the liquid fuel or to driving only by the liquid fuel is controlled as the suppression method.

Supplementary Note 6

The engine device according to Supplementary Note 5, in which the suppression method is determined based on conditional judgment indicating a relationship between the suppression method and the occurrence frequency and the occurrence intensity.

Supplementary Note 7

The engine device according to Supplementary Note 5 or 6, in which the suppression method is determined based on a frequency threshold of the occurrence frequency and an intensity threshold of the occurrence intensity.

Supplementary Note 8

A method of controlling an engine device driven by gaseous fuel, the method including

detecting abnormal combustion occurring in a combustion chamber,
monitoring an occurrence frequency and an occurrence intensity of the abnormal combustion, and
determining a suppression method for suppressing the abnormal combustion according to the occurrence frequency and the occurrence intensity.

Supplementary Note 9

The method of controlling an engine device according to Supplementary Note 8, in which at least one of ignition timing of the gaseous fuel, an air excess ratio of intake air in a mixture gas composed of the gaseous fuel and the intake air, or shut-off of the gaseous fuel is controlled as the suppression method.

Supplementary Note 10

The method of controlling an engine device according to Supplementary Note 8 or 9, in which the suppression method is determined based on conditional judgment indicating a relationship between the suppression method and the occurrence frequency and the occurrence intensity.

Supplementary Note 11

The method of controlling an engine device according to any of Supplementary Notes 8 to 10, in which the suppression method is determined based on a frequency threshold of the occurrence frequency and an intensity threshold of the occurrence intensity.

REFERENCE SIGNS LIST

1 Engine device
2 Engine
3 Intake passage

4 Exhaust passage
5 Control unit
6 Gaseous fuel injection unit
7 Throttle valve
8 Ignition device
11 Cylinder block
12 Cylinder engine
12a Combustion chamber
13 Cylinder
14 Piston
15 Cylinder head
16 Connecting rod
17 Crankshaft
18 Angle sensor
19 Pressure sensor
20 Air-fuel ratio sensor
22 Intake port
23 Exhaust port
24 Intake valve
25 Exhaust valve

**Claims**

1. An engine device driven by gaseous fuel, wherein

   abnormal combustion occurring in a combustion chamber is detected,
   an occurrence frequency and an occurrence intensity of the abnormal combustion are monitored, and
   a suppression method for suppressing the abnormal combustion is determined according to the occurrence frequency and the occurrence intensity.

2. The engine device according to Claim 1, wherein at least one of ignition timing of the gaseous fuel, an air excess ratio of intake air in a mixture gas composed of the gaseous fuel and the intake air, or shut-off of the gaseous fuel is controlled as the suppression method.

3. The engine device according to Claim 1, wherein the suppression method is determined based on conditional judgment indicating a relationship between the suppression method and the occurrence frequency and the occurrence intensity.

4. The engine device according to Claim 1, wherein the suppression method is determined based on a frequency threshold of the occurrence frequency and an intensity threshold of the occurrence intensity.

5. An engine device driven by at least one of gaseous fuel or liquid fuel, wherein

when the engine device is driven by the gaseous fuel, abnormal combustion occurring in a combustion chamber is detected,
an occurrence frequency and an occurrence intensity of the abnormal combustion are monitored,
a suppression method for suppressing the abnormal combustion is determined according to the occurrence frequency and the occurrence intensity, and
at least one of ignition timing of the gaseous fuel, an air excess ratio of intake air in a mixture gas composed of the gaseous fuel and the intake air, shut-off of the gaseous fuel, or switching to driving by both the gaseous fuel and the liquid fuel or to driving only by the liquid fuel is controlled as the suppression method.

6. A method of controlling an engine device driven by gaseous fuel, the method comprising

   detecting abnormal combustion occurring in a combustion chamber,
   monitoring an occurrence frequency and an occurrence intensity of the abnormal combustion, and
   determining a suppression method for suppressing the abnormal combustion according to the occurrence frequency and the occurrence intensity.

# FIG. 1

# FIG. 2

AIR EXCESS RATIO [-]

IGNITION TIMING [deg. aTDC]

# FIG. 3

AIR EXCESS RATIO [-]

ALLOWABLE MAXIMUM CYLINDER PRESSURE

30

31

32

0.0

0.5

2.0

1.0

6.0

IGNITION TIMING  [deg. aTDC]

# FIG. 4

# FIG. 5

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/257253 A1 (KLINGBEIL ADAM EDGAR [US] ET AL) 22 August 2019 (2019-08-22) * paragraphs [0017], [0018], [0022] - [0033], [0041] - [0043]; claims 1-20; figures 1-3 * | 1-6 | INV.<br>F02D41/00<br>F02D41/14<br>F02D19/06<br>F02D19/08<br>F02D19/10<br>F02D35/02 |
| X | CA 2 889 605 A1 (WESTPORT POWER INC [CA]) 24 June 2015 (2015-06-24) * paragraphs [0008] - [0016], [0023] - [0032]; claims 1-20; figures 1-6 * | 1-6 | |
| X | US 6 640 773 B2 (WESTPORT RES INC [CA]) 4 November 2003 (2003-11-04) * page 1, line 45 - page 6, line 27; claims 1-53; figures 1-6 * | 1-4,6 | |
| X | WO 01/59285 A2 (WESTPORT RES INC [CA]; CUMMINS INC [US] ET AL.) 16 August 2001 (2001-08-16) * claims 1-53; figures 1-6 * | 1-4,6 | |
| X | JP 2018 178868 A (MITSUBISHI ELECTRIC CORP) 15 November 2018 (2018-11-15) * paragraphs [0012], [0034] - [0036], [0048], [0053], [0063] - [0066]; claims 1-5; figures 1-7 * | 1-6 | TECHNICAL FIELDS SEARCHED (IPC)<br><br>F02D |
| X | JP 2000 161066 A (TOYOTA MOTOR CORP) 13 June 2000 (2000-06-13) * claim 1; figure 1 * | 1,5,6 | |
| X | US 2015/252738 A1 (SIXEL EIKE [DE] ET AL) 10 September 2015 (2015-09-10) * paragraphs [0011], [0020], [0021], [0026] * | 1-4,6 | |

The present search report has been drawn up for all claims

| Place of search | Date of completion of the search | Examiner |
|---|---|---|
| The Hague | 2 December 2024 | Boye, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 24 19 0703

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2024

| Patent document cited in search report | | | Publication date | Patent family member(s) | | Publication date |
|---|---|---|---|---|---|---|
| US 2019257253 | A1 | | 22-08-2019 | NONE | | |
| CA 2889605 | A1 | | 24-06-2015 | CA | 2889605 A1 | 24-06-2015 |
| | | | | CN | 107709956 A | 16-02-2018 |
| | | | | EP | 3286541 A1 | 28-02-2018 |
| | | | | US | 2018112606 A1 | 26-04-2018 |
| | | | | WO | 2016168940 A1 | 27-10-2016 |
| US 6640773 | B2 | | 04-11-2003 | NONE | | |
| WO 0159285 | A2 | | 16-08-2001 | AU | 3353201 A | 20-08-2001 |
| | | | | BR | 0108255 A | 05-03-2003 |
| | | | | CA | 2398146 A1 | 16-08-2001 |
| | | | | CN | 1460149 A | 03-12-2003 |
| | | | | DE | 60115926 T2 | 10-08-2006 |
| | | | | EP | 1320675 A2 | 25-06-2003 |
| | | | | EP | 1559886 A2 | 03-08-2005 |
| | | | | JP | 2004500514 A | 08-01-2004 |
| | | | | WO | 0159285 A2 | 16-08-2001 |
| JP 2018178868 | A | | 15-11-2018 | CN | 108730057 A | 02-11-2018 |
| | | | | DE | 102017222741 A1 | 18-10-2018 |
| | | | | JP | 6381726 B1 | 29-08-2018 |
| | | | | JP | 2018178868 A | 15-11-2018 |
| | | | | US | 2018298871 A1 | 18-10-2018 |
| JP 2000161066 | A | | 13-06-2000 | JP | 4075165 B2 | 16-04-2008 |
| | | | | JP | 2000161066 A | 13-06-2000 |
| US 2015252738 | A1 | | 10-09-2015 | CN | 104912678 A | 16-09-2015 |
| | | | | EP | 2927467 A1 | 07-10-2015 |
| | | | | GB | 2524005 A | 16-09-2015 |
| | | | | NO | 2927467 T3 | 31-03-2018 |
| | | | | US | 2015252738 A1 | 10-09-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5939263 B
- JP 5405950 B
- JP 4075165 B